Europäisches Patentamt

European Patent Office

Office européen des brevets

(19)

(11) Publication number: **0 128 934**
**B1**

(12) **EUROPEAN PATENT SPECIFICATION**

(45) Date of publication of patent specification: **13.09.89**

(21) Application number: **84900209.2**

(22) Date of filing: **29.11.83**

(86) International application number:
**PCT/US83/01869**

(87) International publication number:
**WO 84/02255 21.06.84 Gazette 84/15**

(51) Int. Cl.⁴: **A 23 D 3/02, A 23 D 5/02,
A 23 K 1/16, A 23 L 1/04,
B 01 J 2/08**

(54) **LIPID PELLETIZATION METHODS, APPARATUS AND PRODUCTS.**

(30) Priority: **06.12.82 US 447130**
**07.12.82 US 447622**

(43) Date of publication of application:
**27.12.84 Bulletin 84/52**

(45) Publication of the grant of the patent:
**13.09.89 Bulletin 89/37**

(84) Designated Contracting States:
**BE DE FR GB NL SE**

(56) References cited:
**DE-A-2 044 814**
**FR-A-1 491 537**
**FR-A-2 087 852**
**GB-A-2 021 140**
**US-A-2 652 334**
**US-A-4 362 748**

(73) Proprietor: **COX, James P.**
**246 East Bartlett Road**
**Lynden, WA 98264 (US)**

(72) Inventor: **COX, James P.**
**246 East Bartlett Road**
**Lynden, WA 98264 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

# EP 0 128 934 B1

**Description**

The present invention relates generally to methods for pelletizing lipids—such, for example, as animal and/or vegetable based fats, oils and greases—to form essentially "dry", discrete, integral lipid particles or pellets that may readily contain any desired percentage of pure, or essentially pure, lipids ranging up to, and in some instances in excess of, from 95% to 99% lipid materials less water of hydration; yet, which are "dry", firm, solid, and easily handled—i.e., they do not bleed or otherwise exude lipids in liquid form and, consequently, do not exhibit an "oily" feel; are characterized by their stability and which are not subject to rancidity; and, which can, therefore, be readily mixed in any desired proportions with other feed products for animal consumption by, for example, ruminants, fowl, birds, fish, swine, canine and feline pets, etc.

More specifically, the invention permits the formation of discrete, "dry", solid pellets and/or particles of such lipids as: i) rendered and unrendered materials; ii) processed or unprocessed restaurant grease—i.e., yellow grease comprised of animal fats, vegetable oils, and/or mixtures thereof; iii) bleachable fancy tallow; iv) hydrogenated beef tallow; v) "special" tallow; etc., which, while they may contain from 0%, or slightly more than 0%, to 30% or more moisture, exclusive of water of hydration, are integral or solid throughout their entire structure, are pourable and free-flowing, and exhibit the external characteristics of dryness and firmness that permit such pellets or particles to be easily handled from the point of origin thereof to a point of use, and to then be incorporated in any desired proportion with animal feed rations, range blocks, or the like without risk of rancidity, clumping, agglomeration or other non-uniform distribution because of the firm, "dry"—i.e., non-oily or non-greasy-surface texture of the pellet or particle. The pellets or particles are essentially temperature insensitive—i.e., they will not readily melt nor are they damaged by freezing, although excessive heat or cold does tend to reduce the moisture content—and, they may be formed in virtually any desired shape. Moreover, because the pellets or particles comprise lipids in integral dry form throughout the entire pellet or particle structure, they may be readily admixed with feed grains without being warmed; and, then pelletized in conventional feed mills to form solid pelletized animal feed rations containing up to on the order of 15%, or more, lipids.

In its more detailed aspects, the invention readily permits the incorporation of a wide range of optional additives with the lipid materials without affecting the pelletization process and/or the foregoing characteristics of resulting pelletized products such, merely by way of example, as: mineral supplements; nutrients; vitamins; medicants including antibiotics and/or antifungals; antioxidants; preservatives; etc. In a modified form of the invention, the pelletized lipids can readily serve as biodegradable controlled-time-release carriers for: pesticides—e.g., attractants or repellants which may be formed as pest control scatters; herbicides; fertilizers; hormones and/or growth nutrients; dust control scatters; deodorants; etc.

The value of fats, oils (other than essential oils), and greases (other than hydrocarbon and/or petroleum based materials), herein generically referred to as lipids, as a nutritional feed supplement for virtually the entire gamut of the animal world including ruminants, swine, fowl, canine or feline pets, fish, birds, etc., has long been recognized. Unfortunately, however, the very nature of such lipids, which are commonly in liquid form or which exude or bleed liquified oil and/or grease exudates, particularly at elevated temperatures, has served to minimize their mass distribution and/or use as a feed supplement. Thus, the tendency of lipids to become rancid and spoil when subjected to oxidants serves to impose severe limitations on the shelf life of dry feed products incorporating such lipids. Moreover, lipid materials, when admixed with grain and similar dry feed products, are not only subject to rancidity but, in addition, they are temperature sensitive, tend to clump or otherwise agglomerate, and to disperse non-uniformly through such conventional feed products; and, consequently, they create severe packaging and handling problems. A typical, but not exclusive, problem area has been the inability to incorporate lipids as a nutritional feed supplement for range fed ruminants because, for example, efforts to incorporate lipids in any meaningful amounts in range blocks have been unsuccessful since the lipid materials tend to bleed out of the range block and to thereafter be subjected to oxidation, rancidity and spoilage, thus destroying the nutritive value of the remaining range block ingredients, rendering the range blocks difficult to handle and, indeed, often causing the range blocks to become soft and pliable, and to collapse or otherwise disintegrate.

The invention has for its object to provide integral, firm, solid, "dry" pellets or particles of lipids, *per se*, containing on the order of about 65% to 70% lipids and 30% to 35% moisture, and ranging up to 95% to 99%, or higher, lipid concentrations, less water of hydration, with attendant reduction of moisture content, suitable for use in a wide range of applications including, but not exclusively limited to, the particularly advantageous application of dry lipid animal food supplements, *per se*, together with methods for forming such lipid pellets or particles, and various feed rations including such dry lipid pellets or particles, wherein:

a) forming an aqueous solution containing at least water and an algin-like coagulant;

b) introducing a lipid into the aqueous solution as to form a coagulant/lipid gel-like emulsion;

c) contacting discrete quantities of the coagulant/lipid emulsion with a setting agent to form solid pellets or particles; and

d) removing the solid pellets or particles wherein said lipid being introduced into said aqueous solution in the step b) in an amount such that the lipid content of the particles or pellets is about 35% to about 50%; or wherein

2

a) forming an aqueous solution containing at least water, an algin-like coagulant, and a coagulant expander;

b) introducing a lipid into the aqueous solution as to form a coagulant/coagulant expander/lipid gel-like emulsion;

c) contacting discrete quantities of the coagulant/coagulant expander/lipid emulsion with a setting agent to form solid pellets or particles; and

d) removing the solid pellets or particles wherein said lipid being introduced into said aqueous solution in the step b) in an amount such that the lipid content of the particles or pellets is 42.3% to about 70%.

In one of its preferred forms, the invention contemplates: i) the addition of small amounts of ammonia ($NH_3$) to the aqueous mixture for rendering the constituent ingredients of the lipid/water system more compatible, for enhancing the emulsifying properties of the algin-like coagulant, and for extending the capacity of the coagulant and therefore reducing the amount of coagulant required; and/or ii), the addition of bentonite or other suitable solubilized coagulant expanders to increase the lipid absorptive capacity of the aqueous coagulant matrix.

In its more detailed aspects, the invention contemplates the addition of optional additives such as mineral supplements, vitamins, blood, yeast, fish oil, preservatives, medications including antibiotics and/or antifungals, antioxidants, visual attractants such as dyes, olfactorily enticing additives, gustatatory enticing flavors, and the like, to meet species-specific nutrient feed requirements. In a modified form of the invention, the aqueous coagulant/lipid mixture may contain suitable pesticides—e.g., attractants or repellants which may be formed as pest control scatters—herbicides, fertilizers, hormones and/or other growth nutrients, deodorants, or the like, so as to provide a biodegradable, controlled-time-release carrier for such additives.

Accordingly, in one of its principal aspects, it is an object of the invention to overcome all of the disadvantages inherent with prior art approaches and to provide a means for delivering lipids, *per se*, in "dry", stable, particulate, solid form, and to provide methods for forming such products, on a simple cost-effective basis that permits the mass production of dry pellets or particles of such lipids, either with or without additives, and wherein the resulting product is temperature insensitive, not subject to rancidity or spoilage, and is "dry" in the sense of being an integral, uniform structure throughout which does not readily exude lipids and has a firm, non-oily surface texture. As a result of attaining the foregoing objective, lipid pellets or particles produced in accordance with the present invention can be readily and uniformly mixed with a wide range of dry animal feeds and mixtures thereof, and subsequently bagged or otherwise packaged for delivery to end users without fear of clumping, agglomeration, rancidity, and/or damage to the packaging materials resulting from liquid lipid exudates.

In another of its important aspects, it is an object of the invention to provide an aqueous coagulant/lipid system which permits the formation of dry lipid pellets or particles having lipid/moisture ratios on the order of up to as much as 65% to 70% lipids to as little as 35% to 30% moisture, or even higher lipid concentrations if desired. In this connection, it is an object of the invention to provide an aqueous coagulant/lipid system characterized by its ability to output dry lipid pellets or particles having lipid concentrations on the order of 65% to 70% without the need for subsequent drying; yet, wherein the lipid concentrations can be further increased by drying in atmospheric air or with the use of suitable conventional heaters to further reduce the moisture content. Moreover, when mixed with dry grains, the pellets or particles tend to further dewater until the water of hydration level for the grains reaches its normal level. As a consequence of attaining this objective, the invention minimizes costs in distribution of pellets or particles having high lipid concentrations, and permits of subsequent pelletization of feed grains and the like having solid, dry, lipid pellets therein utilizing conventional feed mills so as to form discrete pelletized animal feed rations having virtually any desired concentration of lipids contained therein—for example, where dietary considerations comprise the controlling factor, the discrete pelletized animal feed rations may contain up to on the order of 15%, or more, lipids by weight. Moreover, the structure of the lipid pellet or particle readily permits incorporation thereof in range blocks without fear that the lipids will bleed or form liquefied lipid exudates that will cause the range block to disintegrate and/or spoil.

Because of the biodegradable nature of the resulting dry pelletized lipid, *per se*, such pellets may readily serve as controlled-time-release carriers for pesticides—e.g., attractants or repellants which may be in the form of pest control scatters—herbicides, fertilizers, hormones and/or growth nutrients, deodorants, and the like, and permit of ease in widespread broadcasting thereof since they do not tend to clump, agglomerate or otherwise adhere to one another or to foul mechanical distribution systems.

These and other objects and advantages of the present invention will become more readily apparent upon reading the following detailed description and upon reference to the attached drawings, in which:

Figure 1 is a diagrammatic side elevational view, substantially in block-and-line form, here illustrating a typical system and apparatus which may be employed for forming dry, solid, lipid pellets in accordance with the present invention; and

Figure 2 is a plan view, again in diagrammatic block-and-line form, of the system shown in Figure 1;

While the invention is susceptible of various modifications and alternative forms, specific embodiments thereof have been shown by way of example in the drawings and will herein be described in detail. It should be understood, however, that it is not intended to limit the invention to the particular forms

3

disclosed but, on the contrary, the intention is to cover all modifications, equivalents and alternatives falling within the scope of the invention as expressed in the appended claims.

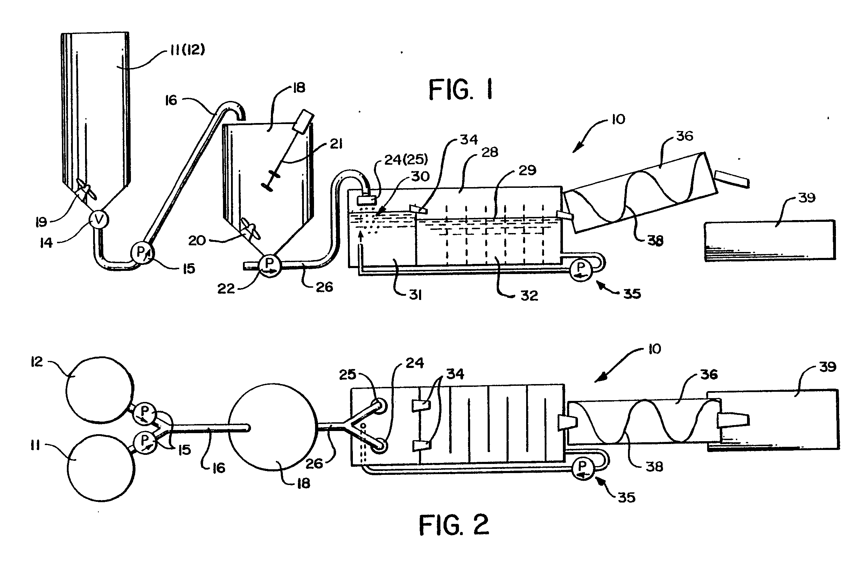

Turning to Figures 1 and 2 conjointly, there has been illustrated, in highly diagrammatic form, an exemplary system, generally indicated at 10, for forming dry, solid, lipid pellets in accordance with the present invention. Thus as here shown, the exemplary system 10 includes a pair of premixing chambers 11, 12 for receiving the aqueous coagulant/lipid mixture and for maintaining the same in a homogeneous semi-liquid or gelled emulsion form, together with suitable valves 14, pumps 15 and conduits 16 for delivering the gel-like emulsion from one or the other of the premix chambers 11, 12 to a predistributor chamber 18. A suitable agitator 19 is provided in each of the premix chambers 11, 12, while a pair of agitators 20, 21 are mounted within the predistributor chamber 18, for continuously mixing the aqueous coagulant/lipid emulsion and maintaining the ingredients in a homogeneous gel-like emulsion form. Although not illustrated in the drawings, the premix chambers 11, 12 and predistributor 18 may be provided with any suitable conventional means for heating the contents and maintaining the lipids at temperature levels above the level at which the lipid may solidify—for example, when the lipid comprises yellow grease which becomes liquid at about 29°C (85°F), the ingredients are preferably kept at temperature levels on the order of about 37°C (98°F). or even up to on the order of 54°C (130°F).

In order to form discrete particles or pellets of lipid materials, the coagulant/lipid gel-like emulsion is withdrawn from the predistributor chamber 18 by means of a conventional piston-type positive displacement pump 22 which serves to meter measured quantities of the gel to a pair of distributors 24, 25 via conduits 26. The distributors 24, 25 are disposed in or above a tank 28 which contains an ion bath 29 preferably formed of an aqueous calcium chloride (CaCl₂) solution containing on the order of 0.1% to about 3% or 4% calcium chloride in a water solution. Alternatively, while not shown in the drawings, the distributors 24, 25 may be positioned beneath the surface of the ion bath 29 and continuous extrusions therefrom may be separated beneath the surface of the bath by, for example, apparatus of the type more fully described in applicant's US—A—4,362,748.

Thus, dependent upon the size and shape of the openings (not shown) in the distributors 24, 25, the amount of coagulant/lipid gel-like emulsion metered therein by the positive displacement piston-type pump 22, and/or the location of the distributors, a plurality of pellets or particles, generally indicated at 30 in Figure 1, are extruded into the calcium chloride bath 29 where calcium ions react with the algin/lipid emulsion to "set" the pellet or particle in a relatively firm, solid, pellet-like or particle configuration. That is, the calcium/algin reaction serves to cross-bond the calcium and algin, rendering the algin—which theretofore had been water soluble—water insoluble. Those skilled in the art will readily appreciate that by carefully controlling the size and/or shape of the outlets in the distributors 24, 25, and/or the stroke of the piston in the positive displacement pump 22, and/or the location of the distributors, the amount of emulsion extruded can be controlled to form small, pellet-like, spherical, or substantially spherical, shapes or elongated maggot-like, worm-like or noodle-like shapes.

In carrying out the present invention, the tank 28 is preferably divided into a first pellet or particle forming chamber 31 disposed immediately beneath the distributors 24, 25 and a second labyrinth-like firming chamber 32 which is shaped and dimensioned to maintain the pellets within the calcium chloride bath 29 for a sufficient length of time—here, preferably in a range of from on the order of at least one minute to about fifteen minutes—to insure adequate firming and setting of the product. For example, where the coagulant/lipid gel-like emulsion includes bentonite and ammonia as hereinafter described in connection with Example I and is extruded as discrete particles in a 1% calcium chloride (CaCl₂) ion bath, it has been found that excellent results are attained when the pellets have a residence time within the ion bath 29 on the order of about six to seven minutes. The arrangement is such that the pellets formed in chamber 31 tend to float on or near the surface of the calcium chloride bath 29 and they are carried by the recirculating flow of the calcium chloride bath over or through weir defining means 34 into the labyrinth firming chamber 32. Such movement of the particles or pellets is aided by providing a recirculating system, generally indicated at 35, for removing the calcium chloride solution from the labyrinth firming chamber 32 at the downstream end thereof and reintroducing the calcium chloride solution into the pellet forming chamber 31 in a generally upwardly extending direction so as to promote fluid movement and floating of the pellets or particles.

In keeping with the present invention, the pelletized or particulate "set" and solid lipid particles are removed from the downstream end of the labyrinth firming tank 32 and introduced directly into a rotary perforate cylinder 36 containing an integral, imperforate, helical flight 38 extending therethrough. Thus, as the pellets transit the cylinder 36, excess calcium chloride solution is separated therefrom and returned to the recirculation system 35 through any suitable means (not shown). The finished pellets or particles may be passed to a separate dryer (not shown) or, alternatively, they may be subjected to drying within the rotatable cylinder 36. In either case, the appropriately dried pellets can be delivered to a suitable tote 39 or, alternatively, to either suitable packaging or bagging equipment (not shown) or for further processing including, but not limited to, systems for mixing the pelletized lipids with other feed materials.

Example I

In carrying out the present invention, essentially dry, integral, solid lipid pellets having a moisture content on the order of approximately 30% were produced by introducing the following ingredients into

4

the heated premix chambers 11, 12 maintained at a temperature on the order of 37°C (98°F).: water, comprising approximately 30 parts of the initial mixture by weight; a coagulant in the form of a suitable alginate (here, sodium alginate) in the range of .0025 to .003 parts by weight; ammonia ($NH_3$) in the range of .005 to .0075 parts by weight; bentonite in the range of .01 to 1.0 parts by weight; and, finally, processed and rendered yellow grease on the order of approximately 70 parts by weight. The distributors 24, 25 and positive displacement piston pump 22 were configured to produce relatively elongate maggot-like particles which were extruded as discrete particles into a 1% calcium chloride ($CaCl_2$) ion bath 29 and which, upon exiting rotary cylinder 36, and a moisture content of 30% and a lipid content of 70% with the particles being in dry, solid, integral form throughout their entire structure, and being devoid of any oily feel or surface texture.

The foregoing pellets were then packaged in containers which, although not sealed, prevented direct exposure of the pellets to atmospheric conditions. It was found that such products maintained their integrity and moisture content substantially unchanged over literally months of storage without being subjected to rancidity, fungal growth and/or deterioration of any sort.

Others of the pellets thus formed were exposed to atmospheric conditions without heating, and it was found that such pellets tended to further dewater during such exposure, ultimately approximating 3% moisture levels and even lower moisture levels. In some instances, the pellets were subjected to very low, very dry and/or pulsating heat which tended to increase the rapidity of the dewatering process, but did not in any way damage the integrity of the pellets. In all such cases, the pellets were not subjected to rancidity or spoilage and they remained substantially heat insensitive; although, at about 1% moisture content they tended to take on the texture of grease balls as contrasted with firm, dry lipid pellets or particles.

In the practice of the present invention in accordance with Example I, the ammonia ($NH_3$), even though added in minute concentrations, served a number of useful functions. Thus, it served to make the constituent ingredients of the lipid/water system more compatible; it enhanced the emulsifying properties of the coagulant; and, it extended the usefulness of the coagulant—that is, the ammonia permitted the pelletization process to proceed with relatively small quantities of coagulant with the advantage that, unlike sodium hydroxide (NaOH) or potassium hydroxide (KOH) which could be used similarly to partially saponify the lipids, $NH_3$ evaporated from the system leaving no residue which could prove harmful under some circumstances when used as a fodder.

Similarly, the bentonite tended to increase the lipid absorptive capacity of the aqueous coagulant and enabled effective pelletization of emulsions containing up to 70% lipids—i.e., the bentonite functioned as a solubilized coagulant expander; whereas, without bentonite, it has been found that the system tends to operate effectively only with lipid concentrations on the order of from about 35% to about 40%, or slightly more; although in these latter instances, it was possible to subsequently dewater the pellets to any desired degree by either exposure to atmospheric conditions for a sufficient length of time and/or by the judicious application of heat.

In experimentation, it has been found that while excellent results are achieved using algin as a coagulant and bentonite as an additive or expander to increase the absorptive capacity of the aqueous coagulant system, other materials can be employed. For example, experimentation has indicated that extracts of okra or aloe vera, as well as pectins, will serve as suitable coagulants. Consequently, as used herein and in the appended claims, the term "algin-like coagulant" is intended to embrace pectins as well as extracts of okra and aloe vera.

Similarly, it has been found that other materials can be employed in lieu of bentonite and achieve the desired result of increasing the absorptive capacity of the aqueous coagulant for lipids. Such other solubilized coagulant expanders include, for example, puffed rice or wheat, wheat middlings, wheat bran, beet pulp, alfalfa meal, verxite (expanded mica), and/or corn cob meal. However, while such alternative materials can achieve essentially the same increase in absorptive capacity of the aqueous coagulant for lipids using somewhat less of the additive by weight than bentonite, such materials tend to be more costly and are more space consuming in the final product—that is to say, the lipid density in the solid dry pellet or particle is not as great as when using bentonite. Accordingly, it is preferred, but not essential, that bentonite and/or ammonia be employed.

Example II

313 g (11 ounces) of sodium alginate comprising approximately .0045 parts by weight of the total mix, was mixed with 39.5 kg (87 pounds) of water comprising 57.735 parts by weight of the overall mix, and the resulting slurry was continuously agitated. Thereafter, 454 g (1 pound) of bentonite comprising .0066 parts by weight of the overall mixture was added to the solubilized coagulant slurry and mixing continued. 28.3 kg (62 pounds, 5 ounces) of processed yellow grease was heated to approximately 51.6°C (125°F). and slowly poured into the solubilized coagulant/bentonite slurry while mixing continued. The resulting gel-like emulsion was then extruded in discrete particles into a 1% calcium chloride ($CaCl_2$) ion bath to form generally spherical pellets which were permitted to remain in the bath for ten minutes.

The resulting pellets were then removed from the bath and tests for the moisture content revealed a moisture content of approximately 57.7%. The pellets were then spread out and exposed to atmospheric conditions for 24 hours. At the end of 24 hours, the pellets exhibited firm, dry, non-oily surface characteristics; and, tests revealed that the moisture content was 30%. The pellets were then placed in a closed container and stored for two months. At the end of the two-month storage period, the pellets exhibited no discernible change in appearance and tests indicated that the moisture content was 29%.

Example III

Lipid pellets were formed in accordance with the procedure of Example I except that the water content was increased to approximately 40% of the final mixture by weight, while unprocessed, liquified yellow grease, reduced in quantity to on the order of approximately 60% by weight, was added to the solubilized algin/bentonite mixture. The resulting pellets, initially having a moisture content of approximately 40%, were packaged and later subjected to testing with birds to determine the true metabolizable energy (TME) of the sample grease pellets on a comparative basis with unprocessed yellow grease derived from the same source as used in the formation of the pellets. The sample pellets were first tested to determine their moisture content; such testing establishing that the pellets were 62.4% dry matter and 37.6% moisture and indicating that exposure to atmospheric conditions had reduced the moisture content slightly. The unprocessed yellow grease was presumed to be 100% dry matter. The pellets and the unprocessed grease were each mixed with corn at a ratio of 15% test material to 85% corn and fed to the birds. Excreta samples were dried in a forced air oven at 60°C. and then assayed. The results of the assay were as follows:

|  | Kcal/g (as is) | Kcal/g dry matter | Kcal/lb (as is) |
| --- | --- | --- | --- |
| Pellets | 5.90±.14 | 9.46 | 2680 |
| Grease | 9.97±.18 | 9.97 | 4532 |

The data clearly indicated that the test pellets were virtually completely digestible and absorbable under the conditions of the test and, that on a comparative basis, the TME of both the sample grease pellets and the unprocessed grease were essentially the same.

Example IV

In keeping with the invention, essentially dry, integral, solid lipid pellets having a moisture content of approximately 20% and suitable for use as a butter substitute or replacement were produced by introducing the following ingredients into the heated premixing chambers 11, 12 maintained at a temperature on the order of 36.6°C (98°F).: water, comprising approximately 50 parts of the initial mixture by weight; a coagulant in the form of a suitable alginate (here, sodium alginate) comprising approximately .005 parts of the initial mixture by weight; and, a commercial grade of coconut fat, melted and in a liquid form, comprising approximately 50 parts of the initial mixture by weight. The distributors 24, 25 and positive displacement piston pump 22 were configured to produce essentially small, pea-shaped pellets which were extruded as discrete particles into a 1% calcium chloride ($CaCl_2$) ion bath 29 and which, upon exiting rotary cylinder 36, had a moisture content of about 50% and a coconut fat content of about 50%. The pellets were then air dried to reduce their moisture content to about 20% by weight, thereby increasing the coconut fat content to about 80% by weight. At this stage, the pellets were in an essentially dry, solid, integral form throughout their entire structure, and were devoid of any oily feel or surface texture.

The resulting pellets presented a visual appearance of small pea-shaped globules of butter. The pellets, when heated, either with or without a food product such as peas or similar vegetable products, tended to give up about 50% of their coconut fat content; but, otherwise, the algin, which was cross-bonded with calcium, remained insoluble in water and the pellets tended to maintain their integrity. The pellets were, nonetheless, edible and the released coconut fat tended to flavor the vegetable product in the same fashion as natural butter. It was noted, however, that the discrete coconut fat pellets, when placed in the mouth, immediately dissolved and gave up all coconut fat.

Certain of the coconut fat pellets produced as set forth in this Example IV were further air dried to reduce their moisture content to essentially only the water of hydration of the pellet and its constituent ingredients—i.e., to a moisture content on the order of only about 5% by weight of the pellet. The thus dried pellets were then sprayed with a liquid phosphate. It was found that when pellets containing a small amount of phosphate were introduced with coconut fat pellets devoid of phosphates in a foodstuff/water environment and heated, the phosphate reacted with the calcium to form calcium phosphate; and, the algin, no longer being cross-bonded with calcium, reverted to its water-soluble state. As a consequence, the pellets dissolved in the food product being heated and gave up all of their coconut fat.

The foregoing experiment was then repeated, substituting pure melted butter for the coconut fat; and, precisely the same results were observed. Identical results were also observed when substituting margarine, chicken fat, beef tallow, pork fat and lard for the coconut fat.

Coconut fat pellets formed as described in this Example IV and devoid of a phosphate spray coating were also admixed with food products in the presence of a lightly encapsulated phosphate pellet which, when introduced into the water being used to heat the food product, dissolved, freeing the phosphates which then reacted with the calcium in the cross-bonded algin/calcium/coconut fat pellet to form calcium phosphate and to thereby render the algin in the pellets water soluble. In all of the foregoing cases involving the use of phosphates, the calcium phosphate produced formed a desirable and nutritional additive to the food product.

Coconut fat pellets devoid of phosphate were also admixed with numerous other food products including, for example, stuffings and instant wild rice dishes. In each case, it was found that sufficient coconut fat was released during the cooking process to provide the desirable flavoring for the food product; yet, at the same time, the water-insoluble pellet formed yellow buds spread throughout the food product which looked quite appealing and attractive and substantially enhanced the aesthetic appearance of the food product.

Example V

A pelletized animal feedstock was prepared utilizing dry particulate, nutritive materials and dry, solid, integral lipid pellets formed in accordance with the procedure of Example I, with all such dried materials being introduced into, and processed through, a conventional California pellet mill. More specifically, the following ingredients were introduced into a California pellet mill premixer in the proportions indicated: 36.29 kg (80 pounds) of alfalfa; 9.1 kg (20 pounds) of cracked corn; 9.1 kg (20 pounds) of wheat middlings; 2.3 kg (5 pounds) of meat meal; and, 1.4 kg (3 pounds) of lignin. The total dry mixture of the foregoing ingredients—viz., 58 kg (128 pounds) of dry nutritive ingredients—was thoroughly mixed to produce a homogeneous dry mixture; and, thereafter, 16.8 kg (37 pounds) of dry, solid, integral grease pellets of approximately 0.3 cm (one-eighth inch) diameter and formed in accordance with the procedure of Example I, but dried to provide pellets having a ninety percent (90%) lipid concentration, were then introduced into the California pellet mill premixer. Mixing was continued for two minutes to insure uniform dispersal of the dry lipid pellets throughout the remaining dry ingredients. Thereafter, the mixture was discharged into the mill die of the California pellet mill which had a diameter of 0.6 cm (one-quarter inch) and which was provided with a cutting blade adjusted to produce pellets approximately 1.1 cm (7/16 inch) in length. The resulting pellets contained: approximately 77.9% dry nutritive ingredients by weight; approximately 19.9% dry, solid, non-flowable, stable, pelletized lipids by weight; and, approximately 2.2% moisture by weight. The pellets formed were completely normal in terms of their structural characteristics and integrity, although the color was slightly darker than identical pellets formed without inclusion of pelletized lipids; and, they showed no abnormal tendency to break, flake or otherwise disintegrate. The pellets did not exude lipids, even after storage for several months; exhibited no oily surface film; and, the lipid contents remained stable and did not exhibit characteristics of rancidity.

Example VI

Lipid pellets were formed in accordance with the procedure of Example I utilizing non-detergent soap stock (NDSS) as the principal lipid source—it being understood by those skilled in the art that NDSS is a nutritionally valuable waste product resulting from various ore flotation processes, soybean and/or soya oil processing operations, etc. For example, NDSS resulting from a typical ore flotation process will commonly include between 80% and 95% oil—in the present Example, the oil was soya oil, a soybean extract; but, other oils are also employed in some ore flotation processes—and between 20% and 5% in the form of combined Foots—i.e., phosphates, sodiums, heavy metals, minerals, etc., combined with free fatty acids of the particular oil being used.

In carrying out the process of the invention using NDSS, a liquid lipid emulsion was formed utilizing the following ingredients in the indicated amounts: one (1) part water by weight; two (2) parts NDSS by weight; a coagulant in the form of a suitable alginate (here, sodium alginate) in the range of from .0025 parts to .005 parts by weight; ammonia ($NH_3$) in the range of .005 parts to .0075 parts by weight; bentonite in the range of .01 parts to .10 parts by weight; and, finally, trisodium phosphate (TSP) in the amount of .005 parts by weight. Discrete quantities of the emulsion were then extruded into a 1% calcium chloride ($CaCl_2$) ion bath 29; and, upon exiting the rotary cylinder 36, exhibited a moisture content of approximately 33%, a soya oil content of approximately 54%, and a combined Foots content of approximately 13%. Trisodium phosphate (TSP) was employed to block reaction of heavy metals contained within the combined Foots with the coagulant. The resulting pellets were dry, solid, integral pellets which permitted usage as a fodder without encountering separation of the soya oil and Foots compounds.

The same experiment as outlined above was repeated without the addition of bentonite; and, while it was found that the materials readily pelletized as indicated herein, it was discovered that certain pigments contained in the NDSS tended to leach out of the finished pellets. However, upon the addition of bentonite or other filtering clays, the leaching tendency was inhibited.

While there have hereinabove been described methods for forming firm, dry, solid, discrete lipid pellets or particles containing relatively high concentrations of lipid materials, those skilled in the art will appreciate that various process modifications can be employed without departing from and scope of the invention as expressed herein and in the appended claims. For example, as hereinabove described, the pellets or particles may be deposited in or formed within an ion bath of a calcium metal salt such, for example, as calcium chloride ($CaCl_2$). However, the pellets or particles may be "set" in other ways such, for example, as being deposited in, or formed in, a bath containing a suitable acid—e.g., hydrochloric acid (HCl) in sufficient quantity to form an aqueous acid solution having a pH which preferably does not exceed from 3 to 3.5. Alternatively, since the principal ingredient of the pellets or particles comprises a lipid, the pellets or particles may be deposited in cold ice water to cause setting; and, thereafter, sprayed with calcium or hydrochloric acid for purposes of reacting the algin component.

In those instances where it is desired to make the pellets or particles firmer and harder than normal, relatively equal amounts of calcium carbonate and a suitable acid such as adipic or citric acid can be added to the solubilized algin mixture in the premixing chambers 11, 12, generally in amounts on the order of about 1% by weight per ingredient.

It is further within the scope of the invention to formulate the solubilized algin mixture in such a manner that the resulting gel-like emulsion can be introduced into molds where it will set automatically into the desired shapes. To accomplish this, one can add a suitable calcium source such, for example, as bonemeal, calcium hydroxide (CaOH), or calcium sulfate (CaSO$_4$) to the mixture along with a suitable acid such as adipic acid or citric acid and a retardant, such as trisodiumphosphate (TSP) or sodium hexametaphosphate, which serves to retard the calcium/algin reaction until the emulsion has been injected into the desired molds. Moreover, such a calcium source and a retarding agent can be added to the solubilized coagulant mixture without an acid source, with the emulsion then being extruded into, or otherwise deposited into, a suitable acid bath such as a hydrochloric (HCl) acid bath having a pH of on the order of not more than 3 to 3.5.

In some instances, it may be desirable to form the lipid pellets or particles with an external oily film so as to promote adhesion of the pellets or particles to conventional feed grains or the like with which the pellets or particles are to be admixed, thereby preventing classification of the lipid pellets or particles and the conventional feed stock. To accomplish this, it has been found that the ratio of coagulant to lipid can be reduced; and, as progressively reduced, there is a tendency to form the desired oily film on the external surface of the resulting product.

Moreover, the present invention also contemplates the use of blends of lipids within the gel-like solubilized coagulant/lipid emulsion. Indeed, when dealing with certain lipids having relatively low temperature melting points, it has been found desirable to blend such lipids with other lipids having higher melting points or, alternatively, to increase the amount of bentonite added to the mixture.

Those skilled in the art will appreciate that in the practice of the present invention, certain species-specific attractants may be incorporated in the lipid pellets or particles to enhance their acceptance by the particular animals to be fed. Such species-specific attractants may be in the form of additives and/or in the form of particular colors, shapes or configurations. Fish, for example, tend to be attracted by specific shapes and/or colors. Chickens tend to have a preference for fats in their diet and, given the opportunity, might selectively consume the fat pellets while ignoring the feed grains. Consequently, when forming pellets or particles for chicken consumption, it may be desirable to insure that the pellets are compatible in size, shape and color to the grain with which the fat pellets are to be admixed. To accomplish this, suitable dyes or coloring matter may be added to the aqueous coagulant solution. Beef cattle, on the other hand, tend to be attracted by sweets; and, consequently, when intended for this type of animal, the pellets may incorporate molasses in the range of from 0% to 6% by weight and, preferably, in the range of from 0% to 1%.

A further typical example where an attractant might find particularly advantageous use is in connection with the use of lipid pellets or particles made in accordance with the present invention as a swine feed supplement. Thus, swine are known to be highly selective in their eating habits and will tend to eat only those items that they find acceptable, while rejecting all other items. Moreover, swine tend to have a keen sense of olfaction and tremendous tactile abilities associated with their noses. Indeed, as is well known, a swine's nose is designed to seek out epigenous and endogenous fungus; and, they are particularly attracted to fungi such as truffles or morels. Accordingly, it is within the scope of the present invention to select a mycelium, carpophores, ascispores and/or basidospores of appropriate fungi—e.g., an ascomycetous fungi or morchella, esp. M. esculenta, which can be added to the solubilized coagulant mix in sufficient quantity to act as an attractant—i.e., approximately 1%—or sufficient viable matter in the presence of sugar so as to promote the formation of a desirable fungal growth from within the pellet or particle. Alternatively, the pellets or particles may be coated externally with such materials. In either instance, the amounts of material additives are, to a high degree, matters of choice; but, excellent results can be achieved when the amount of fungal material added is on the order of 1% by weight of the total mixture, while sugar is added in amounts on the order of up to 2% by weight. Spent yeast may also be used to some extent in lieu of fungal growth as swine attractants.

Indeed, the lipid content of the pellets or particles itself comprises an attractant for many species of animals. Thus, it is known that dry kibbles when fed to canine and/or felines will generally require certain additives to make the dry kibbles palatable to the particular animal being fed. Prior to the advent of the present invention, the inclusion of lipids in or with dry kibbles, although desirable, has not been practicable—principally because of problems of rancidity and spoilage. However, with the present invention, lipid pellets may be incorporated within the kibble structure or may be loosely admixed with kibbles to increase the palatability and nutritional value thereof. Similarly, the lipid content of the pellets or particles when used as a fish feed overcomes the serious problem presently encountered of pellet dissolution whereby upwards of 50% of the feed is lost. Moreover, the increased concentration of lipids makes it possible to cause the pellets to float which is extremely desirable for some hatchery fish.

8

As previously indicated, the present invention readily permits of the addition of a virtually limitless range of additives directly to the solubilized coagulant mix for incorporation in the pellet or particle structure. When the pellets or particles are to be used as feed supplements, such additives may take the form of medications, antioxidants, or preservatives. For example, suitable antibiotic medications might include penicillin, erythyromycin, streptomycin, sulfas, etc. Antifungal medications might include actinonomycin. Typical antioxidants might include ethoxyquin, BHT, or citric acid as an antioxidant synergist. Suitable preservatives might include sulphur dioxide ($SO_2$) or $SO_2$ releasing compounds, ethylene oxide, propionic acid, benzoic acid, or propylene glycol, for example. All of the foregoing may be added to the solubilized coagulant mix in any desired proportions to meet the particular needs. Similarly, a wide range of vitamins or mineral supplements may be included in the mix in any desired proportions.

When the lipid pellets or particles are to be used as controlled-time-release agents for such materials as pesticides—e.g., attractants or repellants which may be in the form of pest control scatters—insecticides, herbicides, fertilizers, hormones and/or growth nutrients, deodorants, etc., the necessary additives can again be added to the solubilized coagulant mix in any appropriate amounts. For example, suitable contact insecticides might include DDT, pyrythrins or organophosphorus compounds; attractant-type scatter might include pheromones, ammonia, anethole, or isoamyl salicylate; while repellant-type insecticides might include benzyl benzoate, dibutyl phthalate, or 2 - phenylcyclohexanol. Similarly, suitable herbicides such, merely by way of example, as petroleum oils may be included within the solubilized coagulant mix and thus incorporated in the finished lipid product. Fertilizers such as animal wastes, ammonium sulfate, or the like, may be incorporated in the product; as can suitable growth nutrients or hormones such as distibesterol.

It has further been found that suitable deodorants can be added to the gel-like emulsion when forming lipid pellets in accordance with the present invention. Such additives will prove highly desirable for usage in connection with sewage lagoons, cattle farms, swine farms and the like. Thus, the lipid pellet serves as a controlled-time-release carrier for the deodorant; and, in those situations where the pellets are employed in odoriferous liquid environments, the fat content of the pellets serves to cause the pellets to float on the surface of the odoriferous liquid, thereby enhancing the deodorizing effect of the deodorant released over time.

It has been found in the practice of the present invention that a wide range of additives such as the foregoing can be readily added to the solubilized coagulant mix and thus incorporated in the finished lipid pellet or particle in virtually any desired quantity and without adversely affecting the coagulant reaction. Indeed, it is within the scope of the invention to include feed materials such as grains, micronutrients, or the like within the solubilized coagulant mix and in sufficient amounts that the finished pellet or particle comprises a balanced feed ration having any desired percentage of lipid content.

Thus, there have hereinabove been described methods and apparatus for forming solid, integral, dry lipid particles or pellets which may comprise essentially high concentrations of lipids and relatively low concentrations of moisture or, alternatively, a wide range of other materials and a desired range of lipid materials. The resulting pellets may be used by themselves as a complete feed ration or, alternatively, only as a lipid feed supplement; concentrated lipid pellets or particles may be readily incorporated in range blocks without risk of bleeding and consequent spoilage; highly concentrated lipid pellets or particles may be readily admixed with feed grains and the like in conventional pellet mills to form a balanced feed ration; and, the lipid pellets may comprise a controlled-time-release carrier for various materials.

A typical range block, for example, will be designed to meet the specific nutritive needs of the animals being fed and may comprise a wide range of materials. For example, such range blocks will often provide a guaranteed analysis with regard to crude proteins, crude fats, crude fibers, salt, vitamins and other micronutrients such as calcium, phosphorous, iodine and the like. In most instances, the amount of crude fats incorporated in such range blocks has been limited to on the order of 2% or less—such limitation being directly attributable to the fact that liquid or liquifiable fats will tend to bleed out of the range block and thus spoil and/or damage the block. While the US—A—4,027,043 suggests that the range block there described can contain a broad range of up to 30% fat and a preferred range of from 5% to 20% fat, it has been found that such quantities of fat simply cannot be maintained in the range block which is commonly subjected to heat, causing otherwise solid lipids to liquify and bleed. However, with the present invention, the solid, discrete, highly .concentrated lipid particles are not heat sensitive and, consequently, can be readily incorporated in the other materials defining the range block without fear of bleeding and damage.

It has been found that the cost of solid, firm, dry, integral lipid pellets or particles produced in accordance with the invention will vary widely dependent on many variables including, for example, the type and amount of coagulant and/or lipids added, and the types and quantities of optional additives included. However, for essentially pure lipid pellets or particles ranging from about 65% to about 95% lipids exclusive of water of hydration, costs are estimated to fall generally in the range of from about $2.80/CWT to about $6.00/CWT and, a probable practical range of about $4.00—$5.00/CWT.

Those skilled in the art will appreciate that terms such as "animal" and/or "animal feed stock" as used herein and in the ensuing claims are used in a non-limiting sense and are intended to cover, for example, fats and oils derived from marine creatures, fish wastes, a wide variety of vegetable wastes, silage, and the like.

**Claims**

1. A method of forming a solid pellet or particle containing lipid material, comprising the steps of:
a) forming an aqueous solution containing at least water and an algin-like coagulant;
b) introducing a lipid into the aqueous solution as to form a coagulant/lipid gel-like emulsion;
c) contacting discrete quantities of the coagulant/lipid emulsion with a setting agent to form solid pellets or particles; and
d) removing the solid pellets or particles wherein said lipid being introduced into said aqueous solution in the step b) in an amount such that the lipid content of the particles or pellets is about 35% to about 50%.

2. A method of forming a solid pellet or particle containing lipid material, comprising the steps of:
a) forming an aqueous solution containing at least water, an algin-like coagulant, and a coagulant expander;
b) introducing a lipid into the aqueous solution as to form a coagulant/coagulant expander/lipid gel-like emulsion;
c) contacting discrete quantities of the coagulant/coagulant expander/lipid emulsion with a setting agent to form solid pellets or particles; and
d) removing the solid pellets or particles wherein said lipid being introduced into said aqueous solution in the step b) in an amount such that the lipid content of the particles or pellets is 42.3% to about 70%.

3. The method as claimed in claim 1 or 2, wherein the solid pellets or particles are dried to a moisture content of about 35% to about 3%.

4. The method as claimed in claim 1 or 2, wherein the solid pellets or particles are dried to a moisture content of about 5% to about 1%.

5. The method as claimed in claim 1—4, wherein the algin-like coagulant is added in an amount of 0.0025—0.0075 parts by weight.

6. The method as claimed in claims 2—5, wherein the coagulant expander is added in an amount of about 0.0066 to 0.1 parts by weight.

7. The method as claimed in claim 6, wherein the coagulant expander is selected from the group consisting of puffed rice and wheat, wheat middlings, wheat bran, beet pulp, alfalfa meal, verxite (expanded mica), corn cob meal and bentonite.

8. The method as claimed in claim 1—7, wherein alkali is added to the solution of step a).

9. The method as claimed in claim 8, wherein the ammonia is added to the solution of step a).

10. The method as claimed in claim 8 or 9, wherein alkali is added in an amount of 0.005—0.0075 parts by weight.

11. The method as claimed in claim 1—10, wherein the liquid lipid introduced in step b) comprises at least one material selected from the group consisting of:
a) butter;
b) margarine;
c) coconut oil;
d) chicken fat;
e) beef tallow;
f) pork fat; and
g) lard.

12. The method as claimed in claim 1—11, wherein the pellet or particle produced comprises a butter substitute.

13. The method as claimed in claim 1—12, wherein the setting agent comprises calcium ions; the pellets produced are dried to reduce their moisture content to a level approaching that of the water of hydration of the pellets and their constituent ingredients; and, the thus dried pellets are sprayed with a liquid phosphate so that upon usage in a water environment, the phosphate interacts with the cross-bonded calcium/coagulant ingredients of the pellet to form calcium phosphate, thus rendering the pellets water soluble.

14. The method of forming a shaped solid lipid material product comprising the steps of:
a) forming an aqueous solution containing at least water and an algin-like coagulant and agitating said solution;
b) adding a calcium source, an edible acid and a retardant to the aqueous solution;
c) introducing a liquid lipid into the aqueous solution;
d) agitating the solution so as to establish and maintain a homogeneous dispersion of the ingredients thereof; and
e) introducing the solution into molds, whereby the retardant serves to delay reaction between the calcium an algin-like coagulant until after introduction of the solution into the molds; and
f) the lipid being introduced into the aqueous solution in an amount such that the lipid content of the homogeneous dispersion is not more than about 40%.

15. The method of forming a solid pellet or article of lipid material, comprising the steps of:
a) forming an aqueous solution containing at least water and an algin-like coagulant and agitating said solution;
b) adding a calcium source and retarding agent to the aqueous solution;

10

c) introducing a liquid lipid into the aqueous solution;

d) agitating the aqueous solution so as to establish and maintain a homogeneous dispersion of the ingredients thereof;

e) introducing discrete quantities of the solution into an acid bath having a pH in a range on the order of 3 to 3.5 where the discrete quantities of solution are set to form a solid lipid pellet or particle; and

f) the lipid being introduced into the aqueous solution in an amount such that the lipid content of the homogeneous dispersion is not more than about 40%.

16. The method as claimed 13—15, which includes the step of incorporating a coagulant expander in said aqueous solution and wherein the lipid is introduced into the solution in an amount which gives the homogeneous dispersion a lipid content of up to about 70%.

17. The method as claimed in claim 13—16, wherein the retardant is selected from the group consisting of:

a) trisodiumphosphate (TSP); and

b) sodium hexametaphosphate.

18. A firm, solid pellet or particle which has exposed surfaces that are dry or have adhesion promoting, oily films thereon, said pellet or particle comprising water, an algin-like coagulant, and a lipid and, said lipid being present in an amount of about 35 to 99 parts by weight.

19. A firm, solid pellet or particle which has exposed surfaces that are dry or have adhesion promoting, oily films thereon, said pellet or particle comprising water, an algin-like coagulant, a coagulant expander and a lipid and, said lipid being present in an amount of 42.3% to 99 parts by weight.

20. A lipid pellet or particle as claimed in claim 18 or 19, wherein said lipid is present in an amount ranging up to from about 95 to about 99 parts by weight of the ingredients present in said pellet or particle.

21. A lipid pellet or particle as claimed in claim 18—20, further comprising one or more additives selected from the group consisting of:

a) fish waste;

b) an animal feed stock;

c) an animal feed attractant;

d) a medication;

e) an antioxidant;

f) a preservative;

g) a pesticide;

h) a herbicide;

i) a fertilizer;·

j) a growth nutrient, and

k) a deodorant.

22. A lipid particle or pellet as claimed in claim 18—21, further comprising as a coating or as an included constituent at least one additive selected from the group consisting of cereal grains with high fat contents and blood.

23. An animal feed ration comprising an animal feed stock admixed with the pellets or particles as claimed in claim 18—22.

24. An animal feed ration as claimed in claim 23, comprising a monolithic range block which has dimensions that are at least several times larger than the dimensions of the particles or pellets incorporated in said range block.

25. An animal feed ration as claimed in claim 23, comprising an integral pellet.

**Patentansprüche**

1. Verfahren zum Bilden einer festen, lipidhaltigen Tablette oder eines solchen Teilchens, mit folgenden Schritten:

a) Bilden einer wäßrigen Lösung, die zumindest Wasser und einen algin-artigen Koagulator enthält;

b) Einführen eines Lipids in die wäßrige Lösung, um eine gel-artige Kogulator/Lipid - Emulsion zu bilden;

c) Zusammenbringen einzelner Mengeneinheiten der Koagulator/Lipid - Emulsion mit einem Bindemittel, um feste Tabletten oder Teilchen zu bilden;

d) Entfernen der festen Tabletten oder Teilchen, wobei im Schritt b) das Lipid in einer solchen Menge in die wäßrige Lösung eingeführt wird, daß der Lipidgehalt der Teilchen oder Tabletten zwischen etwa 35% und etwa 50% liegt.

2. Verfahren zum Bilden einer festen, lipidhaltigen Tablette oder eines solchen Teilchens, mit folgenden Schritten:

a) Bilden einer wäßrigen Lösung, die zumindest Wasser, einen algin-artigen Koagulator und einen Koagulator - Verstärker enthält;

b) Einführen eines Lipids in die wäßrige Lösung, um eine gel-artige Koagulator/Koagulator - Verstärker/Lipid - Emulsion zu bilden;

c) Zusammenbringen einzelner Mengeneinheiten der Koagulator/Koagulator - Verstärker/Lipid - Emulsion mit einem Bindemittel, um feste Tabletten oder Teilchen zu bilden;

d) Entfernen der festen Tabletten oder Teilchen, wobei im Schritt b) das Lipid in einer solchen Menge in die wäßrige Lösung eingeführt wird, daß der Lipidgehalt der Teilchen oder Tabletten zwischen 42,3% und etwa 70% liegt.

3. Verfahren nach Anspruch 1 oder 2, wobei die festen Tabletten oder Teilchen auf einen Feuchtegehalt von etwa 35% bis etwa 3% getrocknet werden.

4. Verfahren nach Anspruch 1 oder 2, wobei die festen Tabletten oder Teilchen auf einen Feuchtegehalt von etwa 5% bis etwa 1% getrocknet werden.

5. Verfahren nach einem der Ansprüche 1 bis 4, wobei der algin-artige Koagulator in einer Menge von 0,0025 bis 0,0075 Gewichtsanteilen beigegeben wird.

6. Verfahren nach einem der Ansprüche 2 bis 5, wobei der Koagulator-Verstärker in einer Menge von etwa 0,0066 bis 0,1 Gewichtsanteilen beigegeben wird.

7. Verfahren nach Anspruch 6, wobei der Koagulator-Verstärker aus der Gruppe gewählt wird, die aus Puffreis und -weizen, Weizenfuttermehl, Weizenkleie, Rübenschnitzel, grobes Luzernemehl, Verxit (expandierter Glimmer), Maiskolbenmehl und Bentonit besteht.

8. Verfahren nach einem der Ansprüche 1 bis 7, wobei der Lösung des Schrittes a) Alkali beigegeben wird.

9. Verfahren nach Anspruch 8, wobei der Lösung des Schrittes a) das Ammoniak beigegeben wird.

10. Verfahren nach Anspruch 8 oder 9, wobei Alkali in einer Menge von 0,005 bis 0,0075 Gewichtsanteilen beigegeben wird.

11. Verfahren nach einem der Ansprüche 1 bis 10, wobei das im Schritt b) eingeführte flüssige Lipid zumindest einen aus der folgenden Gruppe gewählten Stoff umfaßt:
   a) Butter;
   b) Margarine;
   c) Kokosöl;
   d) Hühnchenfett;
   e) Rindertalg;
   f) Schweinefett; und
   g) Speck.

12. Verfahren nach einem der Ansprüche 1 bis 11, wobei die hergestellte Tablette oder das hergestellte Teilchen einen Butterersatzstoff einschließt.

13. Verfahren nach einem der Ansprüche 1 bis 12, wobei das Bindemittel Calciumionen umfaßt; die hergestellten Tabletten getrocknet werden, um ihren Feuchtegehalt auf ein Niveau zu reduzieren, welches jenem des Hydrationswassers der Tabletten und der sie bildenden Inhaltsstoffe nahekommt; und die so getrockneten Tabletten mit einem flüssigen Phosphat besprüht werden, so daß bei Gebrauch in einer wasserhaltigen Umgebung das Phosphat mit den gegenseitig gebundenen Calcium/Koagulator - Bestandteilen der Tablette in Wechselwirkung tritt, um Calciumphosphat zu bilden, und somit die Tabletten wasserlöslich macht.

14. Verfahren zum Bilden eines geformten, festen Lipidstoff - Produkts, mit folgenden Schritten:
   a) Bilden einer wäßrigen Lösung, die zumindest Wasser und einen algin-artigen Koagulator enthält, und Umrühren der Lösung; .
   b) Hinzufügen einer Calciumquelle, einer eßbaren Säure und eines Verzögerungsmittels zu der wäßrigen Lösung;
   c) Einführen eines flüssigen Lipids in die wäßrige Lösung;
   d) Umrühren der Lösung, um eine homogene Dispersion ihrer Inhaltsstoffe herzustellen und aufrechtzuerhalten; und
   e) Einfüllen der Lösung in Gießformen, wobei das Verzögerungsmittel dazu dient, die Reaktion zwischen dem Calcium und dem algin-artigen Koagulator bis nach dem Einfüllen der Lösung in die Gießformen zu verzögern; und wobei
   f) das Lipid in die wäßrige Lösung in einer solchen Menge eingeführt wird, daß der Lipidgehalt der homogenen Dispersion nicht mehr als etwa 40% beträgt.

15. Verfahren zum Bilden einer festen Lipidstoff - Tablette oder eines festen Lipidstoff - Artikels, mit folgenden Schritten:
   a) Bilden einer wäßrigen Lösung, die zumindest Wasser und einen algin-artigen Koagulator enthält, und Umrühren der Lösung;
   b) Hinzufügen einer Calciumquelle und eines Verzögerungsmittels zu der wäßrigen Lösung;
   c) Einführen eines flüssigen Lipids in die wäßrige Lösung;
   d) Umrühren der Lösung, um eine homogene Dispersion ihrer Inhaltsstoffe herzustellen und aufrechtzuerhalten;
   e) Einführen einzelner Mengeneinheiten der Lösung in ein Säurebad mit einem pH-Wert in einem Bereich von größenordnungsmäßig 3 bis 3,5, in welchem die einzelnen Mengeneinheiten der Lösung gebunden werden, um eine feste Lipid-Tablette oder ein festes Lipid-Teilchen zu bilden; und wobei
   f) das Lipid in die wäßrige Lösung in einer solchen Menge eingeführt wird, daß der Lipidgehalt der homogenen Dispersion nicht mehr als etwa 40% beträgt.

16. Verfahren nach einem der Ansprüche 13 bis 15, mit folgendem Schritt:

12

Beigeben eines Koagulator-Verstärkers zu der wäßrigen Lösung, wobei das Lipid in die Lösung in einer Menge eingeführt wird, die der homogenen Dispersion einen Lipidgehalt bis hinauf zu etwa 70% gibt.

17. Verfahren nach einem der Ansprüche 13 bis 16, wobei das Verzögerungsmittel aus folgender Gruppe gewählt wird:

a) Trinatriumphosphat; und

b) Natriumhexametaphosphat.

18. Haltbare, feste Tablette oder ebensolches Teilchen mit offenliegenden Fläche, die trocken sind oder adhäsionsfördernde, ölige Filme tragen, wobei die Tablette oder das Teilchen Wasser, einen algin-artigen Koagulator und ein Lipid enthalten und das Lipid in einer Menge von etwa 35 bis 99 Gewichtsanteilen vorliegt.

19. Haltbare, feste Tablette oder ebensolches Teilchen mit offenliegenden Flächen, die trocken sind oder adhäsionsfördernde, ölige Filme tragen, wobei die Tablette oder das Teilchen Wasser, einen algin-artigen Koagulator, einen Koagulator-Verstärker und ein Lipid enthalten und das Lipid in einer Menge von 42,3 bis 99 Gewichtsanteilen vorliegt.

20. Lipid-Tablette oder -Teilchen nach Anspruch 18 oder 19, wobei das Lipid in einer Menge vorliegt, die in einem Bereich bis hinauf zu etwa 95 bis etwa 99 Gewichtsanteilen der in der Tablette oder dem Teilchen vorhandenen Inhaltsstoffe liegt.

21. Lipid-Tablette oder -Teilchen nach einem der Ansprüche 18 bis 20, ferner mit einem oder mehreren aus folgender Gruppe gewählten Zusätzen:

a) Fischabfall;

b) ein Tierfuttermittel;

c) ein Tierfutterlockmittel;

d) ein Heilmittel;

e) ein Antioxidationsmittel;

f) ein Konservierungsmittel;

g) ein Pestizid;

h) ein Herbizid;

i) ein Düngemittel;

j) ein Wachstumsnährstoff, und

k) ein Desodorierungsmittel.

22. Lipid-Teilchen oder -Tablette nach einem der Ansprüche 18 bis 21, ferner mit zumindest einem Zusatz aus der Gruppe, die aus Getriedekörnern hohen Fettgehalts und Blut besteht, als Beschichtung oder eingeschlossenem Bestandteil.

23. Tierfutterration mit einem Tierfuttermittel, dem die Tabletten oder Teilchen gemäß einem der Ansprüche 18 bis 22 beigemischt sind.

24. Tierfutterration nach Anspruch 23, mit einem einstückigen Weideblock, dessen Abmessungen mindestens mehrfach größer sind als die Abmessungen der in dem Weideblock enthaltenen Teilchen oder Tabletten.

25. Tierfutterration nach Anspruch 23, mit einer homogenen Tablette.

**Revendications**

1. Procédé de préparation d'un granule ou d'une particule solide contenant une substance lipidique, comprenant les étapes suivantes:

a) préparation d'une solution aqueuse contenant au moins de l'eau et un coagulant de type algine;

b) introduction d'un lipide dans la solution aqueuse, de manière à former une émulsion coagulant/lipide de type gel;

c) mise en contact de quantités distinctes de l'émulsion coagulant/lipide avec un agent de solidification, pour la formation de granules ou particules solides; et

d) retrait des granules ou particules solides; dans lequel ledit lipide est introduit dans ladite solution aqueuse, dans l'étape b), en une quantité telle que la teneur en lipides des particules ou granules est d'environ 35 à environ 50%.

2. Procédé de préparation d'un granule ou d'une particule solide contenant une substance lipidique, comprenant les étapes suivantes:

a) préparation d'une solution aqueuse contenant au moins de l'eau, un coagulant de type algine et un extendeur de coagulant;

b) introduction d'un lipide dans la solution aqueuse, de manière à former une émulsion coagulant/extendeur de coagulant/lipide de type gel;

c) mise en contact de quantités distinctes de l'émulsion coagulant/extendeur de coagulant/lipide avec un agent de solidification, pour la formation de granules ou particules solides; et

d) retrait des granules ou particules solides; dans lequel ledit lipide est introduit dans ladite solution aqueuse, dans l'étape b), en une quantité telle que la teneur en lipides des particules ou granules est de 42,3 à environ 70%.

3. Procédé selon la revendication 1 ou 2, dans lequel on sèche les granules ou particules solides jusqu'à une teneur en eau d'environ 35 à environ 3%.

4. Procédé selon la revendication 1 ou 2, dans lequel on sèche les granules ou particules solides jusqu'à une teneur en eau d'environ 5 à environ 1%.

5. Procédé selon l'une des revendications 1 à 4, dans lequel on ajoute le coagulant de type algine en une quantité de 0,0025 à 0,0075 partie en poids.

6. Procédé selon l'une des revendications 2 à 5, dans lequel on ajoute l'extendeur de coagulant en une quantité d'environ 0,0066 à 0,1 partie en poids.

7. Procédé selon la revendication 6, dans lequel l'extendeur de coagulant est choisi parmi le riz et le blé gonflés, les issues de blé, le son, la pulpe de betterave, la farine de luzerne, la verxite (mica expansé), la farine de maîs et la bentonite.

8. Procédé selon l'une des revendications 1 à 7, dans lequel on ajoute un alcali à la solution de l'étape a).

9. Procédé selon la revendication 8, dans lequel on ajoute de l'ammoniac à la solution de l'étape a).

10. Procédé selon la revendication 8 ou 9, dans lequel on ajoute l'alcali en une quantité de 0,005 à 0,0075 partie en poids.

11. Procédé selon l'une des revendications 1 à 10, dans lequel la substance lipidique liquide introduite dans l'étape b) comprend au moins une substance choisie parmi

    a) le beurre,

    b) la margarine,

    c) l'huile de coprah,

    d) le gras de poulet,

    e) le suif,

    f) la graisse de porc, et

    g) le saindoux.

12. Procédé selon l'une des revendications 1 à 11, dans lequel la particule ou le granule produit comprend un produit de remplacement du beurre.

13. Procédé selon l'une des revendications 1 à 12, dans lequel l'agent de solidification comprend des ions calcium; on sèche les granules produits afin de réduire leur teneur en eau jusqu'à une valeur voisine de la teneur en eau d'hydratation des granules et le leurs composants; et on applique par pulvérisation sur les granules ainsi séchés un phosphate liquide, de manière que lors d'utilisation dans un environnement aqueux, le phosphate entre en interaction avec les composants coagulant/calcium réticulés du granule, pour la formation de phosphate de calcium, rendant ainsi les granules solubles dans l'eau.

14. Procédé de préparation d'un produit solide façonné à base de substance lipidique, comprenant les étapes suivantes:

    a) préparation d'une solution aqueuse contenant au moins de l'eau et un coagulant de type algine, et agitation de ladite solution;

    b) addition d'une source de calcium, d'un acide comestible et d'un retardateur à la solution aqueuse;

    c) introduction d'une substance lipidique liquide dans la solution aqueuse;

    d) agitation de la solution de manière à établir et maintenir une dispersion homogène des composants de celle-ci; et

    e) introduction de la solution dans des moules, le retardateur servant à différer la réaction entre le calcium et le coagulant de type algine jusqu'à après l'introduction de la solution dans les moules; et

    f) la substance lipidique étant introduite dans la solution aqueuse en une quantité telle que la teneur en lipides de la dispersion homogène n'excède pas environ 40%.

15. Procédé de préparation d'un granule ou article solide à base de substance lipidique, comprenant les étapes suivantes:

    a) préparation d'une solution aqueuse contenant au moins de l'eau et un coagulant de type algine, et agitation de ladite solution;

    b) addition d'une source de calcium et d'un retardateur à la solution aqueuse;

    c) introduction d'une substance lipidique liquide dans la solution aqueuse;

    d) agitation de la solution aqueuse de manière à établir et maintenir une dispersion homogène des composants de celle-ci;

    e) introduction de quantités distinctes de la solution dans un bain acide ayant un pH dans l'intervalle de l'ordre de 3 à 3,5, dans lequel les quantités distinctes de la solution sont solidifiées pour donner un granule ou une particule lipidique solide; et

    f) la substance lipidique étant introduite dans la solution aqueuse en une quantité telle que la teneur en lipides de la dispersion homogène n'excède pas environ 40%.

16. Procédé selon l'une revendications 13 à 15, lequel comprend l'étape d'incorporation d'un extendeur de coagulant dans ladite solution aqueuse, et dans lequel la substance lipidique est introduite dans la solution en une quantité qui donne à la dispersion homogène une teneur en lipides d'environ 70% au maximum.

17. Procédé selon l'une des revendications 13 à 16, dans lequel le retardateur est choisi parmi

    a) le phosphate trisodique (TSP) et

    b) l'hexamétaphosphate de sodium.

18. Granule ou particule solide, ferme, ayant des surfaces exposées qui sont sèches ou comportent des pellicules huileuses favorisant l'adhérence, ledit granule ou ladite particule comprenant de l'eau, un coagulant de type algine et un lipide, et ledit lipide étant présent en une quantité d'environ 35 à 99 parties en poids.

19. Granule ou particule solide, ferme, ayant des surfaces exposées qui sont sèches ou comportent des pellicules huileuses favorisant l'adhérence, ledit granule ou ladite particule comprenant de l'eau, un coagulant de type algine, un extendeur de coagulant et un lipide, et ledit lipide étant présent en une quantité de 42,3 à 99% en poids.

20. Granule ou particule lipidique selon la revendication 18 ou 19, dans lequel (laquelle) ledit lipide est présent en une quantité allant d'environ 95 à environ 99 parties en poids pour cent parties des composants présents dans ledit granule ou ladite particule.

21. Granule ou particule lipidique selon l'une des revendications 18 à 20, comprenant en outre un ou plusieurs additifs choisis parmi:

a) des déchets de poisson,
b) un aliment de base pour animaux,
c) une substance attractive pour aliment pour animaux,
d) un médicament,
e) un antioxydant,
f) un agent de conservation,
g) un pesticide,
h) un herbicide,
i) un fertilisant,
j) une substance nutritive de croissance et
k) un déodorant.

22. Particule ou granule lipidique selon l'une des revendications 18 à 21, comprenant en outre, sous forme d'enrobage ou en tant que composant inclus, au moins un additif choisi parmi des graines de céréales à haute teneur en matières grasses et le sang.

23. Ration alimentaire pour animaux, comprenant un aliment de base pour animaux, en mélange avec les granules ou particules selon l'une des revendications 18 à 22.

24. Ration alimentaire pour animaux selon la revendication 23, comprenant un bloc d'aliment d'une seule pièce, ayant des dimensions qui sont au moins plusieurs fois supérieures aux dimensions des particules ou granules incorporés dans ledit bloc d'aliment.

25. Ration alimentaire pour animaux selon la revendication 23, comportant un granule complet.

FIG. 1

FIG. 2